# FASCICULE DE BREVET EUROPEEN

(11) **EP 1 149 011 B1**
(45) Date de publication et mention de la délivrance du brevet: **23.10.2002**
(21) Numéro de dépôt: 99916967.5
(22) Date de dépôt: 30.04.1999
(51) Int. Cl.: B62D 7/16, F16C 11/06, B29C 45/44

(54) **ROTULE, NOTAMMENT ROTULE DE DIRECTION OU DE SUSPENSION POUR VEHICULES AUTOMOBILES, ET PROCEDE DE FABRICATION D'UN COUSSINET POUR UNE TELLE ROTULE**
KUGELGELENK, INSBESONDERE KUGELGELENK EINER LENKUNG ODER AUFHÄNGUNG FÜR KRAFTFAHRZEUGE, UND HERSTELLUNGSVERFAHREN EINER LAGERSCHALE FÜR EIN SOLCHES KUGELGELENK
BALL JOINT, IN PARTICULAR STEERING OR SUSPENSION BALL JOINT FOR MOTOR VEHICLES AND, METHOD FOR MAKING A BEARING FOR SAME

(30) Priorité: 04.02.1999 FR 9901314
(43) Date de publication de la demande: 31.10.2001
(73) Titulaire: Société Mécanique de Villeurbanne, 69100 Villeurbanne (FR)
(72) Inventeur: MODAT, Marie-Laure, F-69400 Villefranche sur Saône (FR)
(74) Mandataire: Srour, Elie
(86) Numéro de dépôt international: FR9901036
(87) Numéro de publication internationale: WO00046092

(56) Documents cités:
- EP-A- 0 779 442
- GB-A- 2 216 506
- US-A- 4 235 582
- US-A- 5 188 476

## Description

La présente invention se rapporte à une rotule, notamment une rotule de direction ou de suspension pour véhicules automobiles, comprenant un pivot présentant une tête sphérique, un boîtier de rotule présentant un logement pour recevoir ladite tête du pivot, et un coussinet en matière plastique intercalé entre la tête du pivot et le logement du boîtier.

L'invention se rapporte par ailleurs à un procédé de fabrication d'un coussinet pour une telle rotule.

Des rotules comprenant un coussinet en matière plastique sont connues.

Suivant le document US-A-5 152 628 (=DE-A-40 32 541), un coussinet en forme de zone sphérique s'étendant de part et d'autre de l'équateur comporte d'un côté de l'équateur plusieurs fentes méridiennes qui limitent la déformation plastique du coussinet lors du montage de la tête sphérique du pivot dans le coussinet par dilatation de la partie munie de fentes. Toutefois, ces fentes ont une influence défavorable sur la lubrification du pivot. En effet, ces fentes présentent des aspérités et des surépaisseurs liées au mode de fabrication du coussinet, ce qui crée des surpressions, d'où une augmentation du frottement de la rotule.

Suivant le document EP-A-0 653 573, un coussinet est moulé sous la forme d'un godet hémisphérique prolongé, du côté de son ouverture, par une jupe cylindrique qui, lors de l'assemblage de la rotule, est déformée de façon plastique en segment sphérique par une bague de fermeture de la rotule. Cela ne permet pas de contrôler le frottement, de sorte que de grandes variations du moment de frottement apparaissent lors du montage, lors des premiers déplacements du pivot et tout au long du fonctionnement de la rotule.

Pour toutes ces raisons, les rotules connues ne donnent pas satisfaction et entraînent, lorsqu'elles sont utilisées par exemple comme rotules de direction, une détérioration du retour de la direction, du centrage autour de la position moyenne, du confort de conduite et du comportement de la direction même.

L'état de la technique le plus proche est représenté par le document EP-A-0 779 442.

La présente invention vise une rotule qui se distingue des rotules connues à la fois par une réduction du frottement et par une réduction des variations du moment de friction, sous charge radiale et axiale, de l'élasticité et de l'usure, pendant toute la durée de vie de la rotule.

La rotule, objet de l'invention, comprend un pivot présentant une tête sphérique, un boîtier de rotule présentant un logement pour recevoir ladite tête de pivot, et un coussinet en matière plastique intercalé entre la tête du pivot et le logement du boîtier. Le coussinet de la rotule est constitué par un godet moulé d'une seule pièce, fermé côté fond et présentant, de par moulage,
- une surface intérieure sphérique s'étendant sur un angle solide correspondant à plus d'un hémisphère,
- une ouverture circulaire d'un diamètre inférieur au diamètre de la surface intérieure sphérique, à l'opposé du fond, et
- plusieurs zones de rupture de faible épaisseur réparties sur le pourtour de la partie d'ouverture en s'étendant depuis ladite ouverture en direction du plan équatorial de la surface sphérique disposé parallèlement au plan de ladite ouverture, lesdites zones de rupture étant conformées de manière à subir chacune une rupture prédéfinie en deux sections lors d'une première dilatation de la partie d'ouverture et à permettre, après insertion de la tête du pivot dans le coussinet, un resserrement élastique de la partie d'ouverture avec repositionnement exact des deux sections de chaque zone de rupture autour de la tête du pivot.

La prévision des zones de rupture permet de mouler le coussinet sous la forme d'un godet ayant une surface intérieure sphérique continue tout en remédiant aux inconvénients résultant, sur les rotules connues, de la présence des fentes nécessaires pour permettre l'assemblage de la rotule, ou des déformations plastiques intervenant au moment de l'assemblage.

De préférence, les zones de rupture sont conformées de manière à donner lieu chacune à une rupture suivant une ligne en zigzag, prédéfinie par une ligne d'affaiblissement correspondante.

Pour obtenir une rotule avec un frottement et un amortissement prédéfinis, le coussinet peut présenter extérieurement, dans la zone équatoriale, une partie de forme cylindrique suivie, vers la zone de fond, par une partie de forme générale en cône. De façon correspondante, le logement du boîtier présente une partie de forme cylindrique suivie d'une partie de fond de forme générale en cône.

De préférence, la partie en forme de cône au fond du logement du boîtier, peut comprendre une zone extérieure en forme de tronc de cône avec un angle de conicité supérieur à l'angle de conicité de la partie en forme de cône de la zone de fond du coussinet et une zone intérieure (centrale) en forme de cône avec un angle de conicité inférieur à l'angle de conicité de ladite partie extérieure en forme de cône du coussinet.

De préférence, le coussinet présente, entre sa partie extérieure cylindrique et son ouverture, une partie extérieure en tronc de cône suivie, au niveau de l'ouverture, par un rebord extérieur. La rotule comprend, en outre, une bague de fermeture qui présente une surface intérieure en tronc de cône correspondant à ladite partie extérieure en tronc de cône du coussinet et qui, après insertion de la tête du pivot dans le coussinet, peut être enclenchée derrière le rebord du coussinet pour maintenir ainsi le pivot et le coussinet assemblés sous la forme d'un module susceptible d'être monté tel quel dans le boîtier de rotule et d'y être fixé, par exemple par sertissage. Par le dimensionnement de cette bague de fermeture, il est possible de contrôler parfaitement le jeu entre le coussinet et le pivot de la rotule.

Pour la fabrication du coussinet de rotule suivant l'invention, on moule avantageusement le coussinet entre une partie de moule fixe dont la cavité correspond au moins à la partie de fond du coussinet, au moins une partie de moule mobile dont la cavité correspond au moins à la partie d'ouverture du coussinet, et un noyau mobile à tête sphérique, dont la forme correspond sensiblement à la forme de la tête sphérique du pivot de la rotule. Pour démouler le coussinet, on déplace successivement
a) la partie de moule mobile pour dégager extérieurement la partie d'ouverture du coussinet, c'est-à-dire la partie comprenant les zones de rupture, et
b) le noyau mobile pour extraire la tête sphérique du coussinet, côté ouverture, en provoquant, par dilatation de la partie d'ouverture du coussinet, une rupture définie desdites zones de rupture.

De préférence, on bloque le coussinet dans la partie de moule fixe pendant l'extraction de la tête sphérique du noyau.

En se référant aux dessins annexés, on va décrire ci-après plus en détail un mode de réalisation illustratif et non limitatif d'une rotule suivant l'invention, et un mode de réalisation du procédé de fabrication du coussinet de cette rotule; sur les dessins :
la figure 1 est une coupe axiale d'une rotule suivant l'invention;
la figure 2 est une coupe axiale du coussinet de la rotule de la figure 1;
la figure 3 est une vue extérieure du coussinet de la figure 2;
les figures 4 à 9 représentent en section les séquences de démoulage du coussinet suivant les figures 2 et 3.

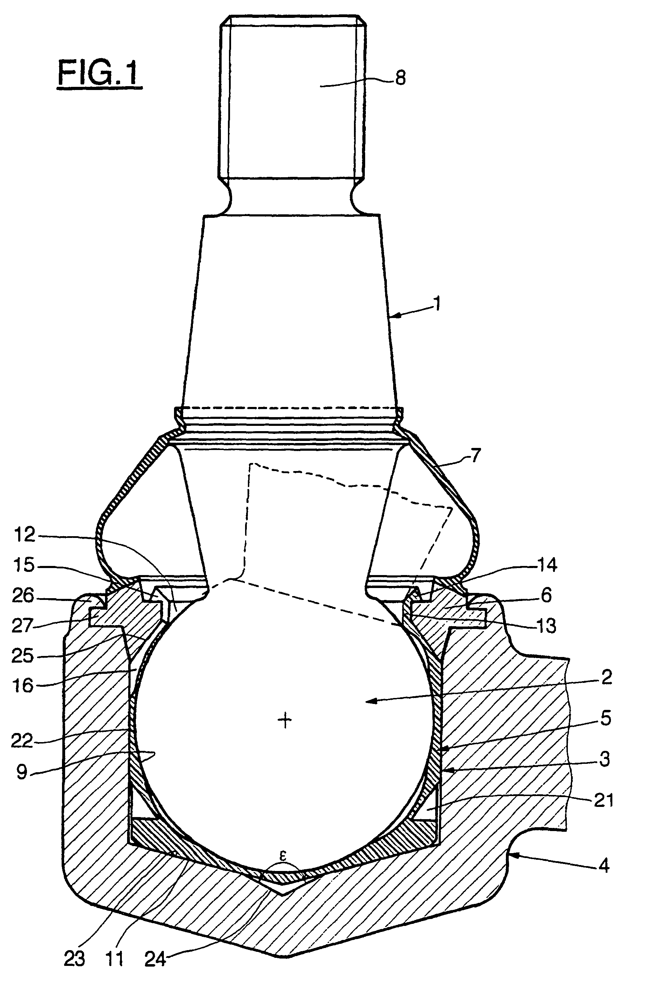

La rotule illustrée par la figure 1, par exemple une rotule de direction, comprend un pivot 1 dont la tête sphérique 2 est montée mobile en rotation autour de son axe et à pivotement (comme représenté en tirets), dans un logement 3 d'un boîtier de rotule 4. Un coussinet 5 en matière plastique est intercalé entre la tête 2 du pivot 1 et le logement 3 du boîtier 4, et une bague de fermeture 6 maintient l'ensemble tête 2/coussinet 5 dans le logement 3 du boîtier 4. Un soufflet élastique 7 fixé d'une part à la bague 6 et d'autre part au pivot 1, entre la tête 2 et un embout de raccordement 8 fileté du pivot 1, isole l'ensemble tête 2/coussinet 5 vis-à-vis de l'extérieur, pour empêcher la pénétration de corps étrangers et la sortie de lubrifiant.

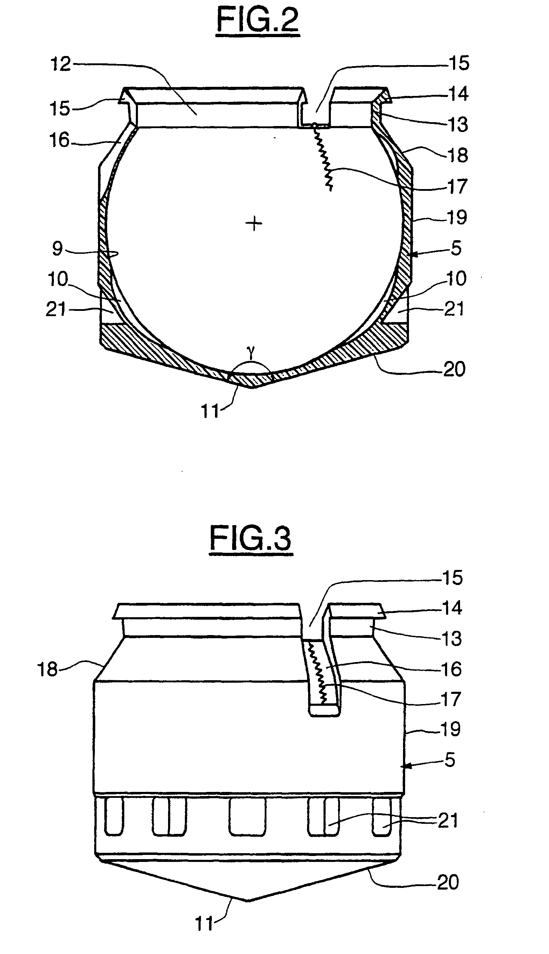

Tel que cela apparaît sur les figures 2 et 3, le coussinet 5 présente une forme générale en godet, avec une surface intérieure 9 sphérique, pouvant comporter, le cas échéant, une pluralité de creux ou dépressions 10 formant réservoirs de lubrifiant. La surface intérieure sphérique 9 s'étend sur un angle solide correspondant à plus d'un hémisphère, en l'occurence environ 3π dans l'exemple illustré. A l'opposé de sa partie de fond 11 fermée, le coussinet 5 présente une ouverture 12 circulaire de diamètre inférieur au diamètre de la surface intérieure sphérique 9. Le coussinet 5 est prolongé au-delà de l'ouverture 12 par une partie 13 sensiblement cylindrique se terminant par un rebord extérieur 14 présentant intérieurement et extérieurement un profil en biseau.

Le prolongement 13 et le rebord 14 sont interrompus par trois échancrures 15 réparties à 120° les unes par rapport aux autres. Chaque échancrure 15 est prolongée en direction de la partie de fond 11 par une zone 16 d'épaisseur réduite présentant, au milieu de sa largeur, une ligne de rupture 17 définie, par exemple par une ligne d'affiblissement en zigzag.

Extérieurement, le coussinet 5 présente, entre le prolongement 13 et la partie de fond 11, successivement une partie tronconique 18, une partie cylindrique 19 et une partie conique 20 ayant un angle de conicité γ.

Les zones 16 d'épaisseur réduite sont ménagées extérieurement , c'est-à-dire depuis la surface extérieure en direction de la surface intérieure, à travers la partie 18 tronconique jusque dans la partie cylindrique 19, jusqu'à faible distance du plan équatorial parallèle à l'ouverture 12, sans affecter la surface intérieure 9 du coussinet 5, tel que cela apparaît en particulier sur la figure 2.

Par ailleurs, le coussinet 5 présente extérieurement, dans la partie cylindrique 19, une pluralité de creux ou encoches 21 dont la fonction est liée au procédé de fabrication du coussinet 5, décrit par la suite.

Le logement 3 du boîtier de rotule 4 selon la figure 1, présente une forme adaptée à la forme extérieure du coussinet 5. En l'occurence, le logement 3 comprend essentiellement une partie de surface cylindrique 22 correspondant à la partie cylindrique 19 du coussinet 5 et une surface de fond 23 tronconique adaptée à la surface conique 20 du fond 11 du coussinet 5. Il est à noter que la surface de fond tronconique 23 entoure une partie centrale 24 dont l'angle de conicité e est plus faible que l'angle de conicité de la partie 23 restante, donc plus faible que l'angle de conicité γ de la surface extérieure 20 du fond 11 du coussinet 5.

La bague de fermeture 6 visible sur la figure 1, est assemblée avec le coussinet 5 après mise en place de la tête sphérique 2 du pivot 1 dans le coussinet 5. La mise en place de la tête dans le coussinet 5 implique une dilatation du coussinet 5 dans sa partie d'ouverture, c'est-à-dire la partie comprenant la partie extérieure 18 tronconique, le prolongement 13 et le rebord 14. Cette dilatation est possible après rupture des zones de rupture 16 à l'endroit des zones d'affaiblissement 17, ces ruptures procurant aux parties situées entre les lignes de rupture 16 une élasticité suffisante pour admettre une dilatation élastique jusqu'au diamètre de la tête sphérique 12.

Une fois la tête sphérique 2 du pivot 1 mise en place dans le coussinet 5, la bague de fermeture 6 est encliquetée derrière le rebord 14 du prolongement 13, cet encliquetage étant facilité par la surface intérieure tronconique 25 de la bague de fermeture 6, dont l'angle de conicité correspondant à l'angle de conicité de la partie extérieure tronconique 18 du coussinet 5.

Il y a lieu de noter que le diamètre intérieur de la bague de fermeture 6 est de préférence légèrement inférieur au diamètre extérieur du prolongement 13 du coussinet 5. De ce fait, lors de l'encliquetage de la bague de fermeture 6 sur le coussinet 5 renfermant la tête sphérique 2 du pivot 1, la bague 6 exerce un serrage radial sur le prolongement 13, ce qui entraîne un resserrement du coussinet 5 autour de la tête 2, de sorte que l'angle de conicité de la surface extérieure conique 20 du fond du coussinet 5 diminue légèrement. Ce resserrement a pour effet de supprimer tout jeu entre la tête 2 du pivot 1 et le coussinet 5 sur le module de rotule comprenant le pivot 1, le coussinet 5 et la bague de fermeture 6 assemblés, avant montage de ce module dans le boîtier de rotule 4.

Enfin, le module de rotule comprenant le pivot 1, le coussinet 5 entourant la tête sphérique 2 du pivot 1 ainsi que la bague de fermeture 6 encliquetée autour de la partie d'ouverture du coussinet 5, est monté dans le boîtier de rotule 4, la forme extérieure du coussinet 5 épousant la forme du logement 3 du boîtier 4, et la bague de fixation 6 est fixée au boîtier 4 par sertissage d'un rebord intérieur 26 du boîtier 4 sur une collerette extérieure 27 de la bague de fermeture 6.

Lors du sertissage du module dans le boîtier de rotule 4, une poussée est exercée (vers le bas sur la figure 1) sur le pivot 1. En fonction de l'importance de cette poussée, il est possible de contrôler la déformation que le coussinet 5 subit dans sa zone de fond 11, du fait de la conformation particulière de la zone de fond 23, 24 du logement 3, et d'établir par là le frottement et l'amonissemnt de la rotule, en éliminant tout jeu radial et axial.

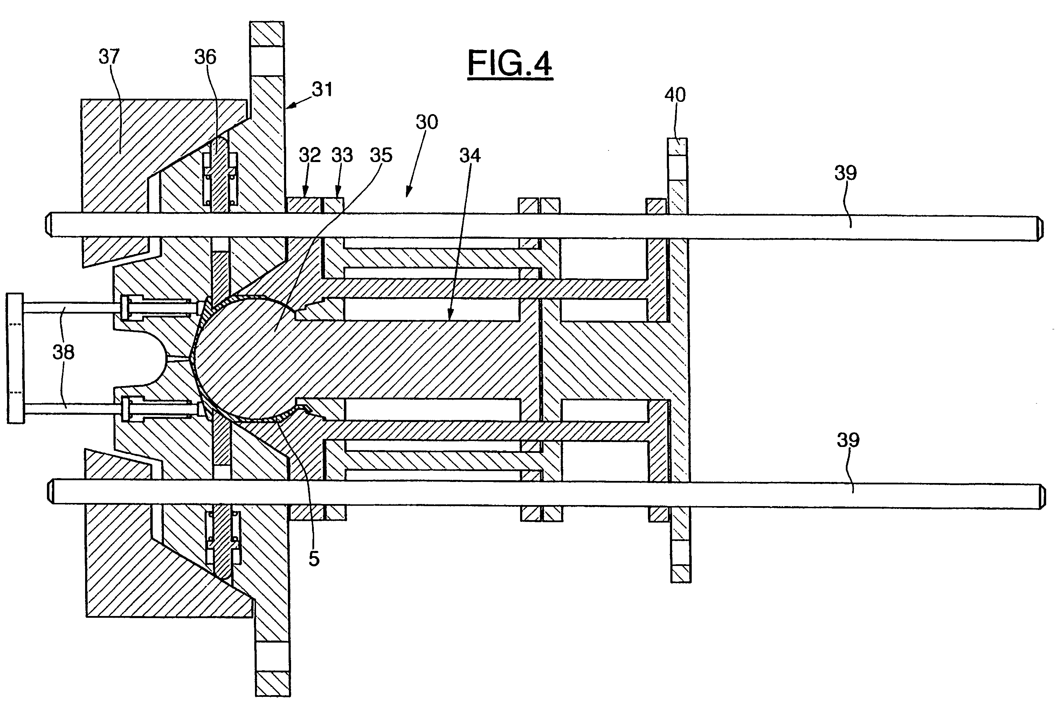

Les figures 4 à 9 illustrent un procédé de fabrication du coussinet 5, permettant d'obtenir directement le coussinet 5 avec ses zones de rupture 16 déjà rompues.

Selon la figure 4, le coussinet 5 tel qu'illustré par les figures 2 et 3, est moulé dans un outillage d'injection 30 comprenant un plateau de moule fixe 31 qui forme la surface extérieure de la partie de fond 11 et une partie de la zone cylindrique 19, un plateau de moule mobile 32 qui forme la surface extérieure restante (partie restante de la zone cylindrique 19, partie tronconique 18 avec les zones de rupture 16, prolongement 13, rebord 14), un plateau de moule mobile 33 qui forme la surface intérieure du prolongement 13 et du rebord 14, et un noyau mobile 34 comprenant une tête sphérique 35 qui forme la surface intérieure sphérique 9 du coussinet 5. On reconnaît par ailleurs plusieurs tiroirs 36 montés mobiles en translation radiale dans le plateau de moule fixe 31 et commandés par un plateau de blocage 37 mobile, et des éjecteurs 38 montés mobiles en translation axiale dans le plateau 31.

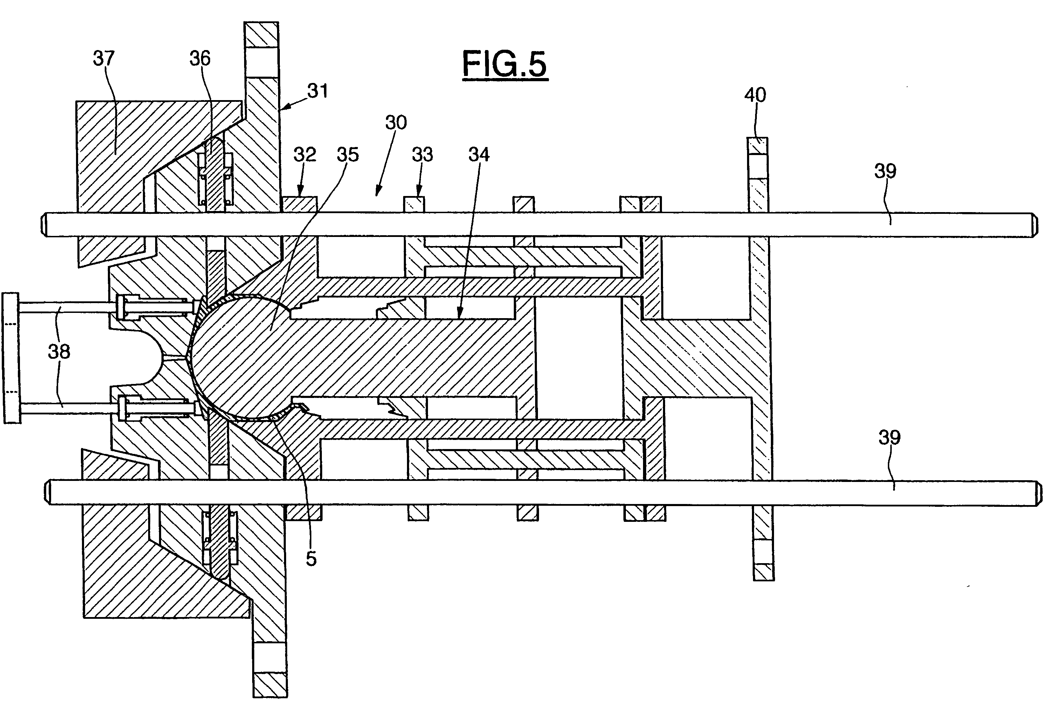

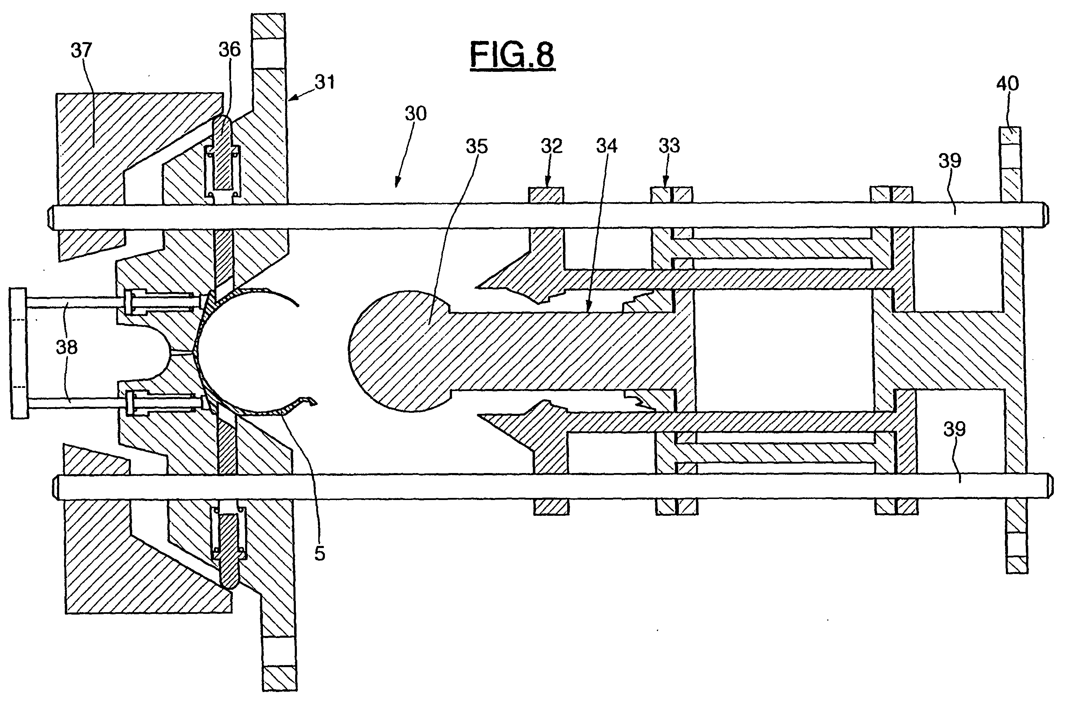

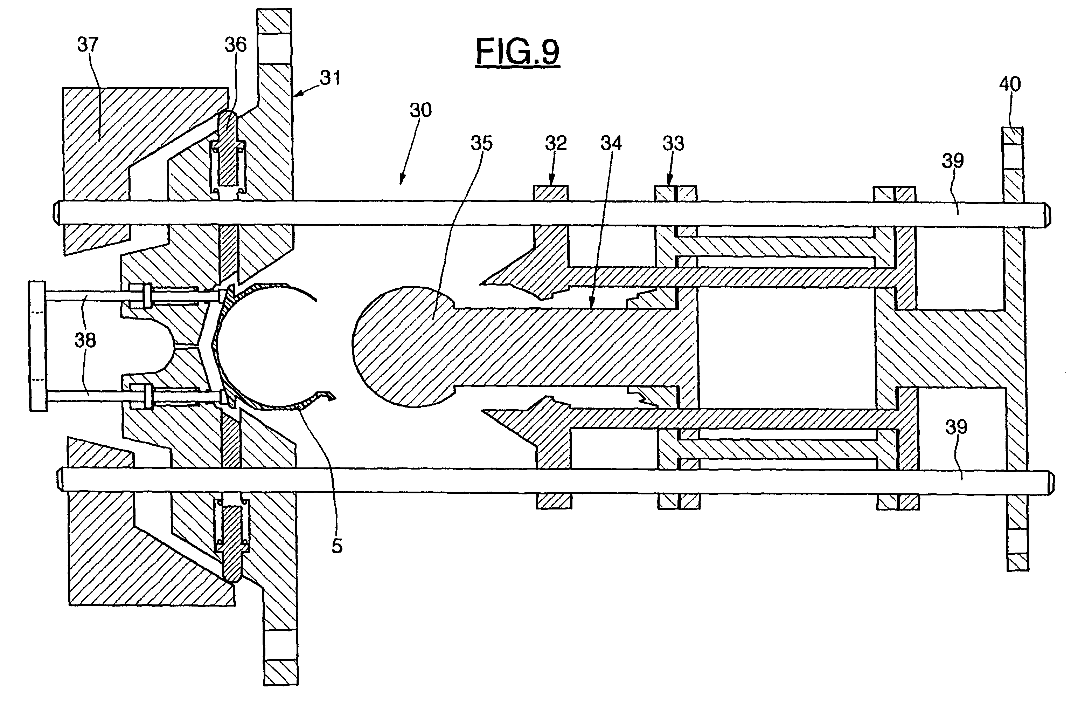

Les plateaux de moule mobiles 32, 33, le noyau mobile 34 et le plateau de blocage mobile 37, sont montés coulissants sur des colonnes 39, les plateaux mobiles 32, 33 et le noyau mobile 34 étant liés de manière qu'une action sur l'un de ces éléments, en l'occurence sur le plateau de moule 33, en 40, dans le sens d'ouverture de l'outillage 30, vers la droite sur la figure 4, entraîne une séquence de phases de démoulage selon les figures 5, 6, 7, avant deux séquences de déblocage et d'éjection suivant les figures 8 et 9.

Selon la figure 5, seul le plateau de moule mobile 33 est déplacé vers la droite, suite à une première course appliquée en 40.

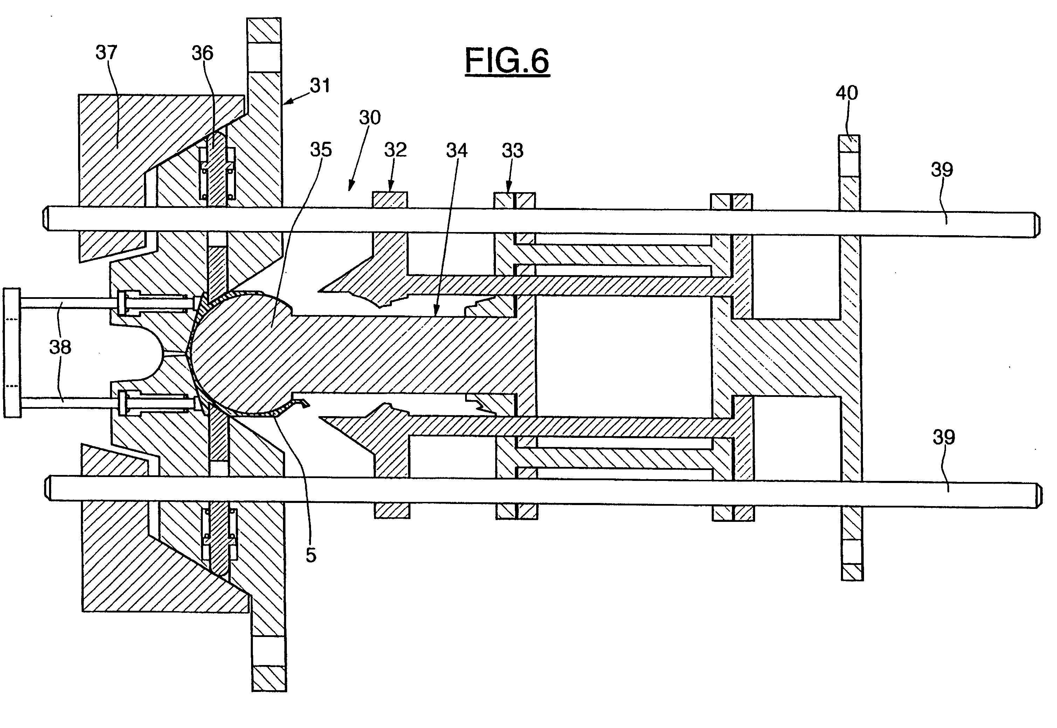

Selon la figure 6, les deux plateaux de moule 33 et 32 sont déplacés simultanément vers la droite, suite à une deuxième course appliquée en 40.

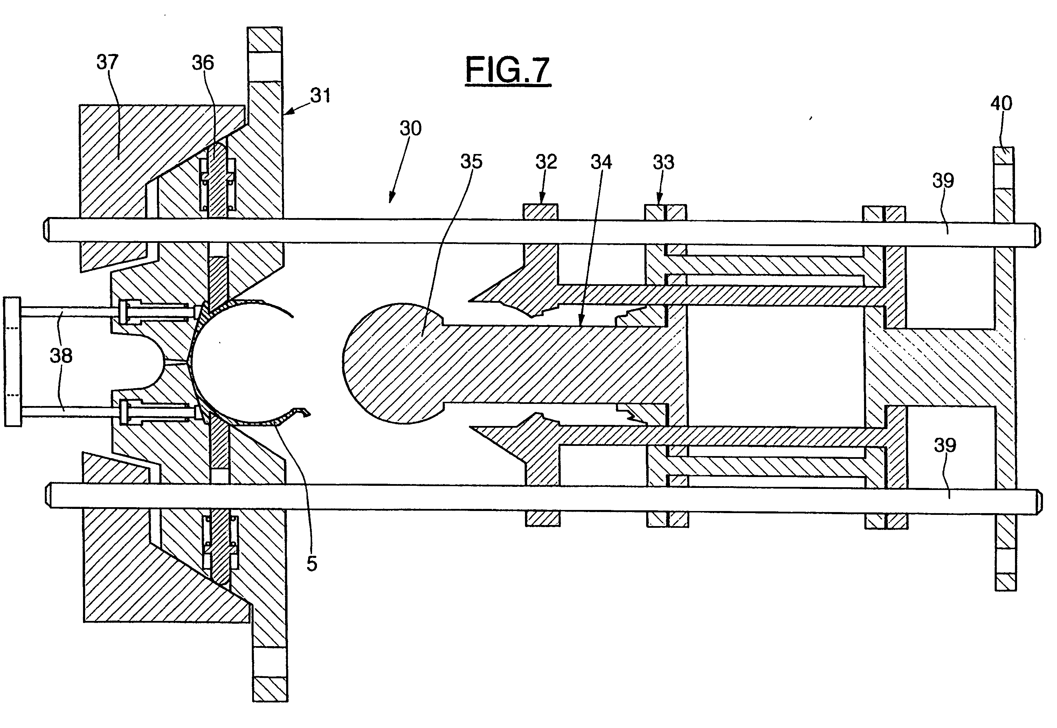

Selon la figure 7, les deux plateaux de moule mobiles 32, 33 et le noyau mobile 34 sont déplacés simultanément vers la droite, suite à une troisième course appliquée en 40. Le coussinet 5 étant retenu dans le plateau de moule fixe 31 par les tiroirs 36 maintenus en position de blocage par le plateau de blocage 37, le déplacement de la tête 35 du noyau 34 provoque une dilatation de la partie d'ouverture du coussinet 5, d'où une rupture à l'endroit des zones de rupture 16, ce qui procure aux parties situées entre les zones de rupture 16 une élasticité suffisante pour permettre une dilatation élastique permettant la sortie de la tête 35.

Selon la figure 8, le déplacement du plateau de blocage mobile 37 vers la gauche permet aux tiroirs 36 de se dégager radialement vers l'extérieur, pour libérer le coussinet 5.

Enfin, selon la figure 9, les éjecteurs 38 éjectent du plateau de moule fixe 31 le coussinet 5 libéré par les tiroirs 36.

Le procédé de démoulage avec rupture tel que représenté et décrit, permet d'obtenir un coussinet qui est prêt, dès son démoulage, à recevoir la tête sphérique d'un pivot de rotule en vue de la constitution d'un module de rotule comprenant le pivot de rotule, le coussinet et la bague de fermeture assemblés, ce module pouvant être monté tel quel dans le boîtier de rotule.

Grâce au contrôle de frottement et d'amortissement que la rotule conforme à l'invention permet par la conception, la géométrie et le procédé de fabrication du coussinet, du fait de l'ajustement parfait du contour intérieur du coussinet à la tête sphérique du pivot et des contours extérieures au logement du boîtier de rotule et à la bague de fermeture, la rotule conforme à l'invention peut être réalisée non seulement sans jeu radial ni axial, mais encore avec un amortissement prédéfini, donc avec une usure réduite au minimum pendant toute la durée de vie de la rotule.

## Revendications

1. Rotule, notamment rotule de direction ou de suspension automobile, comprenant un pivot présentant une tête sphérique, un boîtier de rotule présentant un logement pour recevoir ladite tête du pivot, et un coussinet en matière plastique intercalé entre la tête du pivot et le logement du boîtier, où ledit coussinet (5) de la rotule est constitué par un godet moulé d'une seule pièce, fermé côté fond et présentant, de par moulage,
- une surface intérieure (9) sphérique s'étendant sur un angle solide correspondant à plus d'un hémisphère,
- une ouverture circulaire (12) d'un diamètre inférieur au diamètre de la surface intérieure (9) sphérique, à l'opposé du fond (11), **caractérisée par**
- plusieurs zones de rupture (16) de faible épaisseur, réparties sur le pourtour de la partie d'ouverture en s'étendant depuis ladite ouverture (12) en direction du plan équatorial de la surface sphérique (9), disposé parallèlement au plan de ladite ouverture, lesdites zones de rupture (16) étant conformées de manière à subir chacune une rupture prédéfinie en deux sections lors d'une première dilatation de la partie d'ouverture et à permettre, après insertion de la tête (2) du pivot (1) dans le coussinet (5), un resserrement élastique de la partie d'ouverture avec repositionnement exact des deux sections de chaque zone de rupture (16) autour de la tête du pivot.

2. Rotule suivant la revendication 1, **caractérisée par le fait que** les zones de rupture (16) sont conformées de manière à donner lieu chacune à une rupture suivant une ligne d'affaiblissement (17) prédéfinie.

3. Rotule suivant la revendication 2, **caractérisée par le fait que** ladite ligne d'affaiblissement (17) présente une forme en zigzag.

4. Rotule suivant l'une quelconque des revendications précédentes, **caractérisée par le fait que** le coussinet (5) présente extérieurement, dans la zone équatoriale, une partie (19) de forme cylindrique suivie, vers la zone de fond (11), par une partie (20) de forme générale en cône, et que le logement (3) du boîtier (4) présente une partie (22) de forme cylindrique suivie d'une partie de fond (23, 24) de forme générale en cône.

5. Rotule suivant la revendication 4, **caractérisée par le fait que** la partie (23, 24) en forme de cône du fond du logement (3) du boîtier comprend une zone extérieure (23) en forme de tronc de cône avec un angle de conicité supérieur à l'angle de conicité (γ) de la partie extérieure (20) en forme de cône de la zone de fond (11) du coussinet (5) et une zone intérieure centrale (24) en forme de cône avec un angle de conicité (ε) inférieur à l'angle de conicité de ladite partie extérieure en forme de cône du coussinet.

6. Rotule suivant la revendication 5, **caractérisée par le fait que** le coussinet (5) présente, entre sa partie extérieure cylindrique (19) et son ouverture (12) une partie extérieure (18) en tronc de cône suivi, au niveau de l'ouverture (12), par un rebord extérieur (14), et que la rotule comprend, en outre, une bague de fermeture (6) qui présente une surface intérieure (25) en tronc de cône correspondant à ladite partie extérieure en tronc de cône du coussinet et qui, après insertion de la tête (2) du pivot (1) dans le coussinet (5), peut être enclenchée derrière le rebord (14) du coussinet pour maintenir ainsi le pivot et le coussinet assemblés sous la forme d'un module susceptible d'être monté tel quel dans le boîtier de rotule (4) et d'y être fixé, par exemple par sertissage.

7. Procédé pour la fabrication d'un coussinet de rotule suivant l'une quelconque des revendications précédentes, consistant à mouler le coussinet entre une partie de moule fixe dont la cavité correspond au moins à la partie de fond du coussinet, au moins une partie de moule mobile dont la cavité correspond au moins à la partie d'ouverture du coussinet, et un noyau mobile à tête sphérique, dont la forme correspond sensiblement à la forme de la tête sphérique du pivot de la rotule, **caractérisé par le fait que** pour démouler le coussinet, on déplace successivement
a) la partie de moule mobile pour dégager extérieurement la partie d'ouverture du coussinet, c'est-à-dire la partie comprenant les zones de rupture, et
b) le noyau mobile pour extraire la tête sphérique du coussinet, côté ouverture, en provoquant, par dilatation de la partie d'ouverture du coussinet, une rupture définie desdites zones de rupture.

8. Procédé suivant la revendication 7, **caractérisé par le fait qu'**on bloque coussinet dans la partie de moule fixe pendant l'extraction de la tête sphérique du noyau.

## Patentansprüche

1. Kugelgelenk, insbesondere Kugelgelenk der Lenkung oder der Aufhängung eines Kraftfahrzeugs, umfassend einen Zapfen, der einen kugelförmigen Kopf aufweist, ein Gelenkgehäuse, das eine Aufnahme zur Unterbringung des Kopfes des Zapfens aufweist, und eine Lagerschale aus Kunststoff, die zwischen dem Kopf des Zapfens und der Aufnahme des Gehäuses angeordnet ist, wobei die Lagerschale (5) des Kugelgelenks gebildet wird durch einen aus einem Stück geformten Topf, der bodenseitig geschlossen ist und durch das Formen aufweist:
- eine kugelförmige innere Oberfläche (9), die sich über einen Raumwinkel erstreckt, der mehr als einer Halbkugel entspricht;
- eine kreisförmige Öffnung (12) mit einem Durchmesser, der kleiner ist als der Durchmesser der kugelförmigen inneren Oberfläche (9), auf der dem Boden (11) entgegengesetzten Seite; **gekennzeichnet durch**
- mehrere Bruchzonen (16) mit geringer Dicke, die am äußeren Umfang des Öffnungsteils verteilt sind, wobei sie sich von der Öffnung (12) in Richtung auf die Äquatorebene der kugelförmigen Oberfläche (9) erstrecken, die parallel zur Ebene der Öffnung angeordnet ist, wobei die Bruchzonen (16) so geformt sind, dass sie bei einer ersten Dehnung des Öffnungsteils jeweils einen vordefinierten Bruch in zwei Abschnitte erfahren und nach dem Einfügen des Kopfes (2) des Zapfens (1) in die Lagerschale (5) ein elastisches Zusammendrücken des Öffnungsteils mit exakter Wiederpositionierung der beiden Abschnitte jeder Bruchzone (16) um den Kopf des Zapfens ermöglichen.

2. Kugelgelenk nach Anspruch 1, **dadurch gekennzeichnet, dass** die Bruchzonen (16) so geformt sind, dass sie jeweils zu einem Bruch entlang einer vordefinierten Schwächungslinie (17) führen.

3. Kugelgelenk nach Anspruch 2, **dadurch gekennzeichnet, dass** die Schwächungslinie (17) eine Zickzackform aufweist.

4. Kugelgelenk nach einem der vorhergehenden Ansprüche, **dadurch gekennzeichnet, dass** die Lagerschale (5) außen in der Äquatorzone einen zylinderförmigen Teil (19) aufweist, gefolgt in Richtung auf die Bodenzone (11) von einem Teil (20) mit der allgemeinen Form eines Kegels, und dass die Aufnahme (3) des Gehäuses (4) einen zylinderförmigen Teil (22) aufweist, gefolgt von einem Bodenteil (23, 24) mit der allgemeinen Form eines Kegels.

5. Kugelgelenk nach Anspruch 4, **dadurch gekennzeichnet, dass** der kegelförmige Teil (23, 24) des Bodens der Aufnahme (3) des Gehäuses umfasst: eine äußere Zone (23) in Form eines Kegelstumpfes mit einem Konuswinkel, der größer ist als der Konuswinkel (γ) des kegelförmigen äußeren Teils (20) der Bodenzone (11) der Lagerschale (5), und eine innere, zentrale Zone in Form eines Kegels mit einem Konuswinkel (ε), der kleiner ist als der Konuswinkel des kegelförmigen äußeren Teils der Lagerschale.

6. Kugelgelenk nach Anspruch 5, **dadurch gekennzeichnet, dass** die Lagerschale (5) zwischen ihrem zylindrischen äußeren Teil (19) und ihrer Öffnung (12) einen kegelstumpfförmigen äußeren Teil (18) aufweist, der im Bereich der Öffnung (12) gefolgt ist von einem Außenrand (14), und dass das Kugelgelenk darüber hinaus einen Schließring (6) umfasst, der eine kegelstumpfförmige innere Oberfläche (25) aufweist, die dem kegelstumpfförmigen äußeren Teil der Lagerschale entspricht, und der nach dem Einfügen des Kopfes (2) des Zapfens (1) in die Lagerschale (5) hinter den Rand (14) der Lagerschale eingeklinkt werden kann, um auf diese Weise den Zapfen und die Lagerschale zu halten, die in der Form eines Moduls verbunden sind, das in der Lage ist, so wie es ist, in das Gelenkgehäuse (4) montiert und darin zum Beispiel durch Bördeln befestigt zu werden.

7. Verfahren zur Herstellung einer Lagerschale für ein Kugelgelenks nach einem der vorhergehenden Ansprüche, darin bestehend, dass die Lagerschale geformt wird zwischen einem fixen Formteil, dessen Höhlung mindestens dem Bodenteil der Lagerschale entspricht, mindestens einem beweglichen Formteil, dessen Höhlung mindestens dem Öffnungsteil der Lagerschale entspricht, und einem beweglichen Kern mit kugelförmigen Kopf, dessen Form annähernd der Form des kugelförmigen Kopfes des Zapfens des Kugelgelenks entspricht, **dadurch gekennzeichnet, dass** man zur Ausformung der Lagerschale nacheinander bewegt:
a) den beweglichen Formteil, um den Öffnungsteil der Lagerschale, d.h. den Teil, der die Bruchzonen umfasst, von außen freizumachen; und
b) den beweglichen Kern, um den kugelförmigen Kopf von der Lagerschale öffnungsseitig herauszuziehen, wobei man durch Dehnung des Öffnungsteils der Lagerschale einen definierten Bruch der Bruchzonen hervorruft.

8. Verfahren nach Anspruch 7, **dadurch gekennzeichnet, dass** man die Lagerschale während des Herausziehens des kugelförmigen Kopfes des Kerns im fixen Formteil blockiert.

## Claims

1. Ball joint, in particular an automotive steering or suspension ball joint, comprising a pin having a spherical head, a ball joint casing having a socket for receiving said pin head, and a bush in plastics material interposed between the pin head and the casing socket, where said bush (5) of the ball joint is constituted by a cup moulded in a single piece, closed at the base end and having, as a result of moulding,
- a spherical interior surface (9) extending over a solid angle corresponding to more than a hemisphere,
- a circular aperture (12) of a diameter less than the diameter of the spherical interior surface (9), opposite the base (11), **characterised by**
- several breakage zones (16) of low thickness, distributed around the periphery of the opening part and extending from said aperture (12) in the direction of the equatorial plane of the spherical surface (9) arranged parallel to the plane of said aperture, said breakage zones (16) being configured such as to each be subjected to pre-defined breakage into two sections when there is a first expansion of the opening part and, after insertion of the head (2) of the pin (1) in the bush (5), to allow elastic contraction of the opening part with exact repositioning of the two sections of each breakage zone (16) about the head of the pin.

2. Ball joint according to claim 1, **characterised by** the fact that the breakage zones (16) are configured such as to each provide a breakage along a pre-defined weakened line (17).

3. Ball joint according to claim 2, **characterised by** the fact that said weakened line (17) has a zig-zag shape.

4. Ball joint according to any one of the preceding claims, **characterised by** the fact that externally the bush (5) has in the equatorial zone a cylindrically shaped part (19) followed towards the base zone (11) by a generally cone-shaped part (20), and that the socket (3) of the casing (4) has a cylindrically shaped part (22) followed by a generally cone-shaped base part (23, 24).

5. Ball joint according to claim 4, **characterised by** the fact that the cone-shaped part (23, 24) of the base of the socket (3) of the casing comprises an exterior zone (23) in the shape of a truncated cone with a cone angle greater than the cone angle (γ) of the cone-shaped exterior part (20) of the base zone (11) of the bush (5) and a cone-shaped central interior zone (24) with a cone angle (∈) less than the cone angle of said cone-shaped exterior part of the bush.

6. Ball joint according to claim 5, **characterised by** the fact that the bush (5) has, between its cylindrical exterior part (19) and its aperture (12), a truncated cone exterior part (18) followed, at the level of the aperture (12) by an exterior flange (14), and that the ball joint further comprises a locking ring (6) that has a truncated cone interior surface (25) corresponding to said truncated cone exterior part of the bush and which, after insertion of the head (2) of the pin (1) in the bush (5) can be tightened behind the flange (14) of the bush in order to thus keep the pin and the bush assembled in the form of a unit capable of being mounted as it is in the ball joint casing (4) and of being fixed there, for example, by crimping.

7. Method for manufacture of a ball joint bush according to any one of the preceding claims, consisting of moulding the bush between a fixed mould part, the cavity of which corresponds at least to the base part of the bush, at least a moveable mould part, the cavity of which corresponds to at least the opening part of the bush, and a moveable core with a spherical head, the shape of which substantially corresponds to the shape of the spherical head of the pin of the ball joint, **characterised by** the fact that in order to remove the bush from the mould, the following are displaced in succession
a) the moveable mould part, in order to externally disengage the opening part of the bush, that is to say the part comprising the breakage zones, and
b) the moveable core, in order to extract the spherical head of the bush on the opening side, causing defined breakage of said breakage zones by expansion of the opening part of the bush.

8. Method according to claim 7, **characterised by** the fact that the bush is blocked in the fixed mould part during extraction of the spherical head of the core.
